# EUROPÄISCHE PATENTSCHRIFT

(11) **EP 2 416 918 B1**
(45) Veröffentlichungstag und Bekanntmachung des Hinweises auf die Patenterteilung: **09.03.2016**
(21) Anmeldenummer: 10719899.6
(22) Anmeldetag: 31.03.2010
(51) Int. Cl.: B23K 9/028, B23K 26/28, B23K 28/02, B21C 37/08

(54) **VERFAHREN UND VORRICHTUNG ZUM VERBINDEN DER ENDEN VON ROHREN AUS STAHL MITTELS ORBITALSCHWEISSEN IN HYBRIDTECHNIK**
METHOD AND DEVICE FOR CONNECTING THE ENDS OF STEEL TUBES BY MEANS OF ORBITAL WELDING USING A HYBRID TECHNIQUE
PROCÉDÉ ET DISPOSITIF PERMETTANT DE RELIER LES EXTRÉMITÉS DE TUYAUX EN ACIER PAR SOUDAGE ORBITAL SELON UNE TECHNIQUE HYBRIDE

(30) Priorität: 08.04.2009 DE 102009017711; 05.05.2009 DE 102009020146
(43) Veröffentlichungstag der Anmeldung: 15.02.2012
(73) Patentinhaber: Vallourec Deutschland GmbH, 40472 Düsseldorf (DE)
(72) Erfinder: SCHMID, Christian, 30926 Seelze (DE); OLSCHOK, Simon, 52076 Aachen (DE); BRUNS, Claas, 40468 Düsseldorf (DE)
(74) Vertreter: Meissner, Peter E.
(86) Internationale Anmeldenummer: PCT/DE2010/000399
(87) Internationale Veröffentlichungsnummer: WO 2010/115413

(56) Entgegenhaltungen:
- EP-A1- 0 852 984
- EP-A1- 1 632 306
- WO-A1-2005/056230

## Beschreibung

Die Erfindung betrifft ein Verfahren zum Verbinden der Enden von Stahlrohren mittels Orbitalschweißen in Hybridtechnik, gemäß dem Oberbegriff des Patentanspruches 1, sowie eine Vorrichtung zur Durchführung des Verfahrens gemäß Patentanspruch 10.

Insbesondere betrifft die Erfindung Rohre vorzugsweise mit Wanddicken von mehr als 6 mm, insbesondere mehr als 12 mm und Durchmessern von vorzugsweise mehr als 150 mm, die mittels unterschiedlicher Schweißverfahren, wie beispielsweise dem Laserstrahlschweißen und Lichtbogenschweißen in Hybridtechnik, miteinander zu Rohrleitungen verbunden werden. Unter Rohren werden im Folgenden sowohl kreisrunde Rohre wie auch Hohlprofile mit unterschiedlichen Querschnitten verstanden.

Das Laserstrahlschweißen von Rohren ist allgemein bekannt und es gab stets Bemühungen, den Nahtquerschnitt gegenüber den konventionellen Lichtbogenschweißverfahren, wie dem Lichtbogenhandschweißen oder dem Metallschutzgasschweißen (MSG), deutlich zu verringern und die Schweißzeiten durch höhere Schweißgeschwindigkeiten zu verkürzen, um so die Wirtschaftlichkeit zu verbessern.

Aus der DE 10 2008 029 724 A1 ist ein Verfahren zum Verbinden dickwandiger metallischer Werkstücke mittels Schweißen bekannt, bei dem drei Schweißbereiche vorgesehen sind, in denen das Schweißen aus einer kombinierten Anwendung von Schweißverfahren besteht, und zwar dem Laserstrahlschweißen, Laser-Lichtbogen-Hybridschweißen und Lichtbogenschweißen.

Ebenfalls werden Schweißverfahren kombiniert bei dem in der US 6,191,379 B1 beschriebenen Verfahren, und zwar das Laserschweißen und das TIG Schweißen.

Aus dem beispielsweise aus der WO 2005/056230 A1 bekannten Stand der Technik ist die Kombination eines Metallschutzgas-Schweißverfahrens mit einem Laserstrahlsschweißprozess, das so genannte Laser-MSG-Hybridschweißen, bekannt, das dadurch gekennzeichnet ist, dass der Lichtbogen und der Laserstrahl in einem definierten Abstand zueinander angeordnet sind und eine gegenüber einem reinen Laserstrahlschweißprozess höhere Spaltüberbrückbarkeit erreicht werden kann.

Mit der dort beschriebenen Vorrichtung werden im mobilen Einsatz Rohre in der Orbitalschweißtechnik zu Pipelines verschweißt.

Bei einem solchen Hybridschweißprozess wirken gleichzeitig der Laserstrahl und der Lichtbogen des MSG-Schweißprozesses auf die Schweißstelle ein, so dass sich

Rohrverbindungen mit hoher Wirtschaftlichkeit herstellen lassen. Die Herstellung von Schweißverbindungen zwischen den Rohren erfolgt bei dem bekannten Verfahren mittels einer um das Rohr umlaufenden Schweißvorrichtung in Orbitaltechnik mit einem kombinierten Laser-MSG-Schweißkopf.

Den besonderen Anforderungen des Hybridschweißens, wie z. B. der Einstellbarkeit des Lichtbogenfußpunktes gegenüber der Laserstrahlachse, wird bei diesem Verfahren nur in beschränktem Maße Rechnung getragen, d.h. eine Abstandsveränderung zwischen Laser- und MSG-Schweißkopf in Umfangsrichtung ist zumindest nicht während des Schweißprozesses möglich.

Weiterhin nachteilig hierbei sind das vergleichsweise hohe Gewicht des kombinierten Hybrid-Schweißkopfes bzw. der bewegten Massen sowie die beschränkte Flexibilität hinsichtlich der Prozessführung, insbesondere der Geometrieparameter des Hybrid-Schweißkopfes.

Eine Anpassung der Schweißparameter an die jeweilige Schweißposition gestaltet sich beim Laser-MSG-Hybridschweißen aufgrund der sich aus der Kombination zweier Verfahren ergebenden hohen Anzahl an Stellmöglichkeiten besonders aufwändig. Dies gilt besonders für die in der WO 2005/056230 A1 gezeigten geometrischen Anordnungen von Laserstrahl und MSG-Schweißbrenner.

Von besonderem Nachteil ist, dass die geometrischen Parameter des Hybridschweißprozesses bei direkter Adaption eines MSG-Brenners an eine Laserstrahlbearbeitungsoptik nur mit hohem Aufwand während des Prozesses einstellbar sind.

Nachteilig hinsichtlich des Orbitalschweißens mit einem Laser-MSG-Hybridschweißprozess ist weiterhin, dass der aus der WO 2005/056230 A1 bekannte Hybridschweißkopf aus jeweils einzelnen Komponenten, die in ihrem Zusammenwirken nicht optimal aufeinander abgestimmt sind, zusammengesetzt sind.

Die bisher bekannten Lösungen zur technischen Umsetzung des Laser-MSG-Hybridschweißens sind daher komplex aufgebaut, in den Einstellmöglichkeiten der Prozessparameter beschränkt und zeichnen sich durch ein hohes Gewicht aus.

Zusammenfassend ist festzustellen, dass nach dem Stand der Technik zurzeit kein industriell einsetzbares Orbitalführungssystem existiert, welches auf die Anforderungen des Laser-Lichtbogen-Hybridschweißens optimal abgestimmt ist.

Die bekannten kombinierten Hybridschweißköpfe sind nur beschränkt für diese Anwendung geeignet, da sie ein vergleichsweise hohes Gewicht aufweisen, seitens der Einstellbarkeit bzw. Verstellbarkeit der geometrischen Parameter während des Schweißprozesses relativ unflexibel sind, sowie aufgrund ihrer Abmessungen den Anforderungen insbesondere für das Offshore-Schweißen nicht entsprechen.

Aufgabe der Erfindung ist es, ein Verfahren zum Verbinden der Enden von Rohren aus Stahl mittels Orbitalschweißen in Laser-Lichtbogen-Hybridtechnik anzugeben, welches die beschriebenen Nachteile überwindet. Des Weiteren soll eine Vorrichtung zur Durchführung des Verfahrens bereitgestellt werden.

Diese Aufgabe wird ausgehend vom Oberbegriff in Verbindung mit den kennzeichnenden Merkmalen des Anspruches 1 gelöst. Vorteilhafte Weiterbildungen sowie eine Vorrichtung zur Durchführung des Verfahrens sind Bestandteil von Unteransprüchen.

Nach der Lehre der Erfindung wird ein Verfahren angewandt, bei dem der Laser- und der Lichtbogenschweißkopf getrennt auf dem Führungsring positioniert und während des Schweißvorganges unabhängig voneinander über dem Rohrumfang verfahren und gesteuert werden.

Hierbei wird der Laserstrahl und der Lichtbogen entweder gleichzeitig oder zeitlich versetzt und aufeinander abgestimmt in einer definierten geometrischen Konstellation zueinander betrieben, wobei sich beide Einzelprozesse gegenseitig beeinflussen, z. B. innerhalb eines gemeinsamen Schmelzbades.

Die zur Herstellung einer Schweißnaht notwendige Bewegung des Laserstrahls und des MSG-Brenners wird durch die aufeinander abgestimmte Bewegung zweier Fahrwagen, von denen einer mindestens eine Laserstrahloptik und ein weiterer mindestens einen MSG-Brenner führt, realisiert. Die Fahrwagen sind während des Schweißprozesses unabhängig voneinander zu steuern bzw. zu bewegen, so dass der Abstand zwischen Laserstrahl und Lichtbogenfußpunkt während des Prozesses geändert werden kann.

Durch die gewählte Anordnung ergibt sich eine einfache Möglichkeit zur Änderung des Arbeitsabstandes zwischen Laserstrahl und Lichtbogen. Bei Integration entsprechender Achsen auf den Fahrwagen zur Einstellung der beiden Komponenten Laserstrahloptik und Lichtbogenbrenner ist jede beliebige Anordnung dieser Komponenten zueinander möglich, wobei gegenüber einem System mit einem kombinierten Hybridschweißkopf, der über einen Fahrwagen bewegt wird, eine deutlich einfacherer und in der Anwendung flexiblere Konstruktion möglich ist.

Insbesondere ist es möglich komplexe Bewegungsabläufe, wie z. B. eine Bewegung nur des Laserstrahls in und um die Raumachsen, auf einfache Art zu realisieren.

Durch die Erfindung ist es möglich, deutliche Qualitätsverbesserungen hinsichtlich des Schweißergebnisses beim Orbitalschweißen zu erreichen. In Abhängigkeit der Schweißposition können für das Laser-MSG-Hybridschweißen jeweils optimierte geometrische Schweißparameter angewendet werden. Schweißstrategien, die z. B. ein Pendeln oder Schwenkbewegungen des Lichtbogens oder des Laserstrahls auch unabhängig voneinander erfordern, können mit geringem konstruktivem, steuerungstechnischem und programmiertechnischem Aufwand umgesetzt werden.

Als besonders günstig im Hinblick auf die Prozessgestaltung, wie z. B. die Strahlführung, hat sich der Einsatz von fasergeführter Laserstrahlung bewährt. Innerhalb der optischen Systeme können sowohl transmittierende als auch reflektierende Elemente zum Einsatz kommen.

Zur Realisierung eines Orbitalschweißprozesses werden die Fahrwagen vorzugsweise auf einem die zu fügenden Rohre umschließenden Rahmen als Führungsring angeordnet. Es können weitere Fahrwagen auf der Rahmenkonstruktion bewegt werden, wobei bei Anwendung entsprechender Führungssysteme auch mehrere nebeneinander angeordnete Fahrbahnen möglich sind und dadurch bei entsprechender Anordnung einzelne Fahrwagen auch aneinander vorbeibewegt werden können. Kennzeichnend ist, dass die Fahrwagen in ihrer Richtung und Geschwindigkeit unabhängig voneinander bewegt werden können.

Um die Bauhöhe der Bearbeitungsoptik zu reduzieren wird idealerweise mit einer Winkeloptik gearbeitet, bei der eine 90°-Umlenkung über einen Fokussierspiegel realisiert wird. Zur Anwendung kommen ein Festkörperlaser (z. B. Scheibenlaser oder Faserlaser) mit Lichtleitfaser und eine konventionelle MSG-Stromquelle. Die Zuführung des Drahtes ist z. B. über eine Drahtspule auf dem Fahrwagen des Lichtbogenschweißkopfes oder über ein Schlauchpaket möglich.

Sämtliche Steuerungs- und Kontrollfunktionen werden dabei in einer übergeordneten Steuerung realisiert.

Ergänzend zu den für den eigentlichen Schweißprozess notwendigen Werkzeugen können mittels der Fahrwagen weitere für den Schweißprozess notwendige, den Schweißprozess unterstützende oder für nachfolgende Fertigungsschritte erforderliche Werkzeuge oder Komponenten geführt werden. Dies können z. B. ein Nahtverfolgungssystem oder Messmittel zur zerstörungsfreien Qualitätskontrolle der Schweißnaht durch Nahtvermessung oder Fehlerdetektion sein.

Mittels eines dem Schweißprozess vorweg bewegten Systems kann die Nahtfuge erfasst werden und der nachfolgende Schweißprozess in seiner Lage geregelt werden.

Mittels z. B. optischer Systeme ist eine Qualitätsprüfung der Schweißnaht möglich.

Des Weiteren sind auch Bearbeitungsschritte wie z. B. das Schleifen von Endkratern mittels eines auf einem Fahrwagen montierten Werkzeugs möglich.

Bei Wanddicken, die nicht in einer Lage verschweißt werden können, werden die Fülllagen vorteilhaft mittels Laser-MSG-Hybridschweißen oder MSG allein mit einer Schweißlage oder mehreren Schweißlagen geschweißt. Vorteilhaft kann es zudem sein, den Schweißkopf oder die Schweißköpfe pendelnd beim Schweißen zu bewegen, um einen sicheren und fehlerfreien Nahtflankeneinbrand zu gewährleisten. Der Einsatz der Impulslichtbogentechnik beim MSG-Schweißprozess kann fallweise ebenfalls vorteilhaft sein.

Für den Laserschweißprozess kann des Weiteren eine Manipulation des Laserstrahls für eine Erhöhung des Nahtflankeneinbrands und zur Vermeidung von Schweißnahtfehlern sinnvoll sein.

Hervorzuheben ist, dass in Abhängigkeit der Schweißposition jeweils eine optimale Anordnung des Laserstrahls und des Lichtbogens zueinander gewählt werden kann, so dass in allen Positionen eine hohe Nahtqualität bei gleichzeitig hoher Wirtschaftlichkeit erreicht wird.

Zur Herstellung der Fülllagen können weitere Schweißwerkzeuge auf einem oder mehreren Fahrwagen angeordnet sein, wobei die Fülllagen gleichzeitig auch während des Hybridschweißens hergestellt werden können.

Das Orbitalschweißsystem kann mit Regelkreisen ausgestattet werden, die als Stellgrößen sowohl Lichtbogenparameter und Laserstrahlparameter, wie z. B. die Laserleistung, und insbesondere auch geometrische Parameter aufweisen können. Als Eingangsgrößen werden insbesondere Messwerte aus dem Hybridschweißprozess verwendet.

In einer weiteren vorteilhaften Ausgestaltung der Erfindung erfolgt während des Schweißens eine Drehbewegung des Laserstrahls um den Mittelpunkt eines Fokussierspiegels unabhängig vom MSG-Schweißbrenner. Dies ermöglicht eine Beschleunigung des Laserstrahls in und/oder quer zur Vorschubrichtung zur Vermeidung von möglichen Schweißnahtfehlern.

Zusammenfassend weist das erfindungsgemäße Verfahren bzw. die entsprechende Vorrichtung folgende Merkmale bzw. Vorteile auf:
➢ Auf einem Führungsring können mehrere Fahrwagen bzw. Schlitten gleichzeitig und unabhängig voneinander bewegt werden.
➢ Jeder Schlitten kann ein separates Werkzeug aufnehmen und/oder eine spezielle Funktion ausführen.
➢ Je ein Schlitten nimmt einen MAG-Brenner und eine Laserstrahlfokussieroptik auf. Durch die Positionierung und Führung der beiden Werkzeuge zueinander wird ein Laser-MSG-Hybridprozess realisiert.
➢ Während der Bearbeitung ist die Änderung des Abstandes zwischen den jeweiligen Werkzeugen möglich.
➢ Ein Schlitten nimmt ein optisch, taktil oder elektromagnetisch arbeitendes System zur Nahtverfolgung auf. Ein optisches System kann zusätzlich zur Nahtführung der Nahtvermessung bzw. Qualitätskontrolle nach dem Schweißen dienen.
➢ Weitere Schlitten können z. B. einen MAG-Brenner zur Herstellung von Fülllagen oder eine Vorrichtung zum automatischen Schleifen eines Endkraters aufnehmen.
➢ Flexible Umsetzung des Laser-MSG-Hybridschweißprozesses zum Orbitalschweißen.
➢ In Abhängigkeit der Schweißposition lassen sich jederzeit optimale Parameter einstellen.
➢ Gewichtsreduzierter Aufbau durch optimal aufeinander abgestimmte Einzelsysteme.
➢ Hohe Produktivität durch zeitliche Überlappung unterschiedlicher Bearbeitungs- und/oder Prüfschritte.
➢ Der MSG-Brenner und die Laserbearbeitungsoptik sind über mindestens jeweils eine Achse (Linear- oder Drehachse) unabhängig voneinander in ihrer Anordnung zueinander und zum Werkstück einstellbar. Diese Einstellung kann während des Schweißprozesses erfolgen.
➢ Die Laserstrahloptik kann mit einer Drehachse, die senkrecht auf der Schweißnahtebene angeordnet ist, bewegt werden.
➢ Die Vorrichtung bzw. der Führungsrahmen kann Fahrwagen auf einem oder mehreren parallelen Bahnen unabhängig voneinander führen. Es ist teilweise möglich, die Fahrwagen aneinander vorbei zu bewegen.
➢ Ein dem Schweißprozess vorangestellter Fahrwagen kann ein Werkzeug zur Vorwärmung des Schweißnahtbereiches aufnehmen. Eine Regelung der Vorwärmtemperatur in Abhängigkeit von Messwerten und/oder anderen Prozessparametern (z. B. Position Schweißbrenner auf dem Umfang) ist möglich.
➢ Die Fokussieroptik kann mit einem optischen System zur Beobachtung des Schweißprozesses und zur Ermittlung von Prozessmerkmalen zur Regelung des Schweißprozesses insbesondere über eine Bewegung der Optik z. B. zur Variation der Fokuslage und über eine Anpassung der Laserleistung ausgestattet werden.

Weitere Merkmale, Vorteile und Einzelheiten der Erfindung ergeben sich aus der nachfolgenden Beschreibung der dargestellten Figuren.

Es zeigen:
- **Figur 1**: den prinzipiellen Aufbau der erfindungsgemäßen Orbitalschweißvorrichtung mit getrennt verfahrbarem Laser- und Lichtbogenschweißkopf,
- **Figur 2**: wie Figur 1, jedoch mit weiteren separat verfahrbaren Werkzeugen.

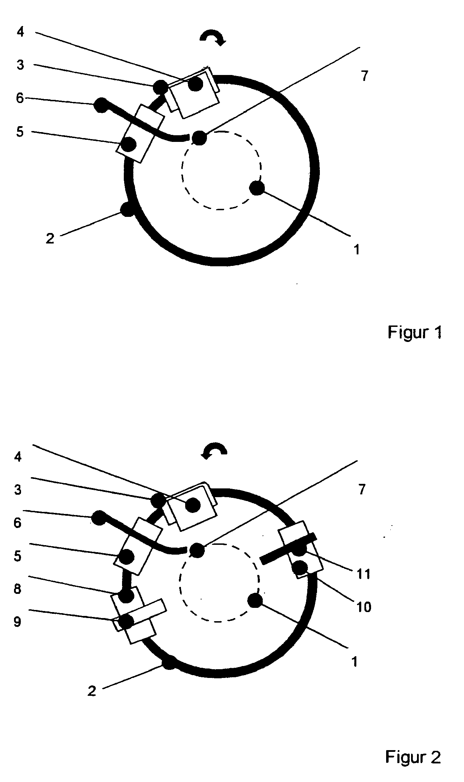

**Figur 1** zeigt den prinzipiellen Aufbau der erfindungsgemäßen Orbitalschweißvorrichtung zum Laser-Lichtbogen-Hybridschweißen von Rohren.

Die zu verschweißenden Enden der Rohre 1 werden über eine hier nicht dargestellte Innenzentriervorrichtung zentriert und so für das Zusammenschweißen vorbereitet.

Auf dem als Rahmenkonstruktion ausgeführten Führungsring 2 sind ein Fahrwagen 3 mit einem Laserschweißkopf 4 und ein Fahrwagen 5 mit einem Lichtbogenschweißkopf 6 angeordnet, die jeweils getrennt voneinander verfahr- und steuerbar sind. Ebenfalls nicht dargestellt sind hier die Strom- und Medienversorgung der Schweißköpfe sowie deren Steuerung. Die Bearbeitungszone des Hybridschweißprozesses am Rohr 1 ist mit 7 gekennzeichnet.

Jeder Fahrwagen 3 bzw. 5 ist mit einem hier nicht dargestellten Direktantrieb ausgestattet, der die voneinander unabhängige Bewegung mithilfe eines einzigen Antriebssystems ermöglicht. Durch die parallele Anordnung weiterer Direktantriebe und Führungen ist prinzipiell auch die Möglichkeit gegeben, dass die Fahrwagen aneinander vorbei bewegt werden können. Im vorliegenden Fall verfahren die beiden Fahrwagen 3 und 5 im Uhrzeigersinn (Pfeilrichtung) um das Rohr 1, wobei der Laserschweißkopf vorläuft.

In **Figur 2** ist eine Ausführung gezeigt, bei der zusätzliche Werkzeuge auf dem Führungsrahmen angeordnet sind. Für gleiche Bauteile wurden gleiche Bezugsziffern verwendet, wobei nur auf die zusätzlichen Merkmale der **Figur 2** eingegangen wird.

Für die Darstellung ist ein dem Laserschweißkopf 4 entgegen dem Uhrzeigersinn (Pfeilrichtung) vorlaufender Lichtbogenschweißkopf 6 gewählt worden. Dem Hybridschweißprozess, bzw. den beiden Fahrwagen 3 und 5 für die Schweißköpfe 4 und 6 voraus, ist ein optisches Nahtverfolgungssystem 9 auf einem Fahrwagen 8 installiert, welches nach dem Schweißvorgang zur Qualitätskontrolle (z. B. Fotodokumentation der Schweißnaht, automatische Nahtvermessung, Fehlererkennung) genutzt werden kann. Dem Schweißprozess nachlaufend ist ein weiterer Fahrwagen 10 auf dem Führungsring 2 angeordnet, der einen weiteren Lichtbogenschweißkopf 11 zur Herstellung von Fülllagen aufweist. Alternativ könnte dies z. B. auch ein Werkzeug zum automatischen Schleifen von Nahtenden oder ein System zur zerstörungsfreien Prüfung der Schweißnaht sein, so dass ohne Wechsel des Führungsringes eine Nahtprüfung durchgeführt werden kann.

Eine kompakte Bauweise ermöglicht eine hier nicht dargestellte Einhausung des gesamten Systems zum Zweck der Lasersicherheit.

**Bezugszeichenliste**

| **Nr.** | **Bezeichnung** |
|---|---|
| 1 | Rohr |
| 2 | Führungsring |
| 3 | Fahrwagen A |
| 4 | Laserschweißkopf |
| 5 | Fahrwagen B |
| 6 | Lichtbogenschweißkopf 1 |
| 7 | Bearbeitungszone Hybridschweißprozess |
| 8 | Fahrwagen C |
| 9 | Nahtverfolgungssystem |
| 10 | Fahrwagen D |
| 11 | Lichtbogenschweißkopf 2 |

## Patentansprüche

1. Verfahren zum Verbinden der Enden von Rohren (1) aus Stahl mittels Orbitalschweißen in Laser-Lichtbogen Hybridtechnik, deren Enden mit einer oder mehreren Schweißlagen verbunden werden, wobei als Werkzeuge der Laser- und der Lichtbogenschweißkopf (4,6) während des Schweißens über mindestens einen im Bereich der Schweißstelle um ein Rohrende fest angeordneten Führungsring (2) geführt und um den Rohrumfang verfahren werden
**dadurch gekennzeichnet,**
**dass** der Laser- und der Lichtbogenschweißkopf (4,6) getrennt auf dem Führungsring (2) positioniert sind und während des Schweißvorganges unabhängig voneinander über dem Rohrumfang verfahren und gesteuert werden.

2. Verfahren nach Anspruch 1
**dadurch gekennzeichnet,**
**dass** die Verfahrgeschwindigkeit und der Abstand von Laser- und Lichtbogenschweißkopf (4,6) getrennt einstellbar sind.

3. Verfahren nach Anspruch 1 und 2
**dadurch gekennzeichnet,**
**dass** vor dem Beginn des Schweißprozesses der Schweißnahtbereich durch eine den Schweißköpfen (4,6) vorausfahrende Vorwärmeinrichtung vorgewärmt wird.

4. Verfahren nach Anspruch 3
**dadurch gekennzeichnet,**
**dass** die Vorwärmeinrichtung unabhängig von den Schweißwerkzeugen (4,6) auf dem Führungsring (2) verfahren wird.

5. Verfahren nach einem der Ansprüche 1 - 4
**dadurch gekennzeichnet,**
**dass** weitere Werkzeuge unabhängig voneinander auf dem Führungsring (2) während des Schweißens verfahren werden.

6. Verfahren nach Anspruch 5
**dadurch gekennzeichnet,**
**dass** als weitere Werkzeuge ein oder mehrere zusätzliche Schweißköpfe, ein Nahtverfolgungssystem (9), ein mechanisches Bearbeitungssystem der Schweißnaht und/oder ein System zur zerstörungsfreien Schweißnahtprüfung eingesetzt werden.

7. Verfahren nach einem der Ansprüche 1 - 6
**dadurch gekennzeichnet,**
**dass** die Werkzeuge auf mehreren an einem Rohrende oder beiden Rohrenden angeordneten Führungsringen (2) verfahren werden.

8. Verfahren nach einem der Ansprüche 1 - 7
**dadurch gekennzeichnet,**
**dass** als Lichtbogenschweißverfahren das Metall-Schutzgasschweißen (MSG) eingesetzt wird.

9. Verfahren nach Anspruch 8
**dadurch gekennzeichnet,**
**dass** das MSG-Schweißen mittels Impulslichtbogentechnik ausgeführt wird.

10. Vorrichtung zur Durchführung des Verfahrens nach einem der Ansprüche 1 - 9 mit mindestens einem um ein Rohrende angeordneten Führungsring (2) mit einem auf diesem angeordneten Fahrwagen (3,5) zur Aufnahme des Laser- und Lichtbogenschweißkopfes (4,6) als Schweißwerkzeuge
**dadurch gekennzeichnet,**
**dass** der Laserschweißkopf (4) und der Lichtbogenschweißkopf (6) jeweils getrennt auf einem separat auf dem Führungsring (2) verfahr- und steuerbaren Fahrwagen (3, 5) angeordnet sind.

11. Vorrichtung nach Anspruch 10
**dadurch gekennzeichnet,**
**dass** weitere Werkzeuge auf jeweils separat verfahr- und steuerbaren Fahrwagen (8, 10) angeordnet sind.

12. Vorrichtung nach Anspruch 11
**dadurch gekennzeichnet,**
**dass** die Werkzeuge eine Vorwärmeinrichtung, ein oder mehrere zusätzliche Schweißköpfe (11), ein Nahtverfolgungssystem (9), ein mechanisches Bearbeitungssystem der Schweißnaht und/oder ein System zur zerstörungsfreien Schweißnahtprüfung sind.

13. Vorrichtung nach Ansprüche 10 - 12
**dadurch gekennzeichnet,**
**dass** die Fahrwagen (3, 5, 8, 10) auf einem oder mehreren Führungsringen (2) angeordnet und separat verfahr- und steuerbar sind.

14. Vorrichtung nach Anspruch 13
**dadurch gekennzeichnet,**
**dass** die Führungsringe (2) an einem oder beiden Rohrenden angeordnet sind.

## Claims

1. Method for connecting the ends of steel tubes (1) by means of orbital welding using a hybrid laser arc technique, the ends of which steel tubes are connected to one or more welding passes, the laser welding head and the arc welding head (4, 6) as tools being guided during the welding process over at least one guide ring (2) which is arranged securely in the region of the weld site around a tube end, and being moved about the tube circumference, **characterised in that** the laser welding head and the arc welding head (4, 6) are positioned separately on the guide ring (2) and are moved and controlled over the tube circumference independently of one another during the welding procedure.

2. Method according to claim 1, **characterised in that** the movement speed and the distance of the laser welding head and arc welding head (4, 6) are adjustable separately.

3. Method according to claims 1 and 2, **characterised in that**, before the start of the welding process, the weld seam region is preheated by a preheating apparatus which travels ahead of the welding heads (4, 6).

4. Method according to claim 3, **characterised in that** the preheating apparatus is moved on the guide ring (2) independently of the welding tools (4, 6).

5. Method according to any of claims 1 to 4, **characterised in that** further tools are moved on the guide ring (2) independently of one another during welding.

6. Method according to claim 5, **characterised in that** one or more additional welding heads, a seam tracking system (9), a mechanical processing system of the weld seam and/or a system for the non-destructive testing of the weld seam are used as further tools.

7. Method according to any of claims 1 to 6, **characterised in that** the tools are moved on a plurality of guide rings (2) which are arranged on one tube end or both tube ends.

8. Method according to any of claims 1 to 7, **characterised in that** the gas metal arc welding (GMAW) is used as an arc welding process.

9. Method according to claim 8, **characterised in that** the GMAW welding is carried out using a pulsed arc technique.

10. Device for carrying out the method according to any of claims 1 to 9, comprising at least one guide ring (2) which is arranged around a tube end and has a trolley (3, 5) arranged on the guide ring for receiving the laser welding head and arc welding head (4, 6) as welding tools, **characterised in that** the laser welding head (4) and the arc welding head (6) are each arranged separately on a trolley (3, 5) which is separately movable and controllable on the guide ring (2).

11. Device according to claim 10, **characterised in that** further tools are arranged on separately movable and controllable trolleys (8, 10) in each case.

12. Device according to claim 11, **characterised in that** the tools are a preheating apparatus, one or more additional welding heads (11), a seam tracking system (9), a mechanical processing system of the weld seam and/or a system for the non-destructive testing of the weld seam.

13. Device according to claims 10 to 12, **characterised in that** the trolleys (3, 5, 8, 10) are arranged on one or more guide rings (2) and are movable and controllable separately.

14. Device according to claim 13, **characterised in that** the guide rings (2) are arranged on one or both tube ends.

## Revendications

1. Procédé servant à relier des extrémités de tuyau (1) en acier au moyen d'un soudage orbital selon une technique hybride laser-arc électrique, dont les extrémités sont assemblées avec une ou à plusieurs couches de soudage, la tête de soudage au laser et la tête de soudage à l'arc électrique (4, 6) étant guidées, au cours du soudage, par l'intermédiaire au moins d'une bague de guidage (2) disposée de manière fixe dans la zone de l'emplacement de soudage autour d'une extrémité de tuyau et étant déplacées autour de la périphérie de tuyau,
**caractérisé en ce**
**que** la tête de soudage au laser et la tête de soudage à l'arc électrique (4, 6) sont positionnées de manière isolée sur la bague de guidage (2) et sont déplacées et commandées, au cours de l'opération de soudage, indépendamment l'une de l'autre sur la périphérie de tuyau.

2. Procédé selon la revendication 1,
**caractérisé en ce**
**que** la vitesse de déplacement et la distance des têtes de soudage au laser et à l'arc électrique (4, 6) sont réglées de manière isolée.

3. Procédé selon la revendication 1 et 2,
**caractérisé en ce**
**qu'**avant le début du processus de soudage, la zone de cordon de soudure est préchauffée par un dispositif de préchauffage se déplaçant devant les têtes de soudage (4, 6).

4. Procédé selon la revendication 3,
**caractérisé en ce**
**que** le dispositif de préchauffage est déplacé indépendamment des outils de soudage (4, 6) sur la bague de guidage (2).

5. Procédé selon l'une quelconque des revendications 1 - 4,
**caractérisé en ce**
**que** d'autres outils sont déplacés indépendamment les uns des autres sur la bague de guidage (2) au cours du soudage.

6. Procédé selon la revendication 5,
**caractérisé en ce**
**qu'**une ou plusieurs têtes de soudage supplémentaires, un système de suivi de cordon (9), un système d'usinage mécanique du cordon de soudure et/ou un système de vérification de cordon de soudure sans dégradations sont utilisés comme autres outils.

7. Procédé selon l'une quelconque des revendications 1 - 6,
**caractérisé en ce**
**que** les outils sont déplacés sur plusieurs bagues de guidage (2) disposées au niveau d'une extrémité de tuyau ou de deux extrémités de tuyau.

8. Procédé selon l'une quelconque des revendications 1 - 7,
**caractérisé en ce**
**que** le soudage à fil fusible sous protection gazeuse (MIG-MAG) est utilisé en tant que procédé de soudage à l'arc électrique.

9. Procédé selon la revendication 8,
**caractérisé en ce**
**que** le soudage MIG-MAG est exécuté au moyen d'une technique à l'arc pulsé.

10. Dispositif servant à exécuter le procédé selon l'une quelconque des revendications 1 - 9 comprenant au moins une bague de guidage (2) disposée autour d'une extrémité de tuyau avec un chariot de déplacement (3, 5) disposé sur ladite bague de guidage, servant à recevoir la tête de soudage au laser et la tête de soudage à l'arc électrique (4, 6) en tant qu'outils de soudage,
**caractérisé en ce**
**que** la tête de soudage au laser (4) et la tête de soudage à l'arc électrique (6) sont disposées respectivement de manière isolée sur un chariot de déplacement (3, 5) pouvant être déplacé et commandé de manière séparée sur la bague de guidage (2).

11. Dispositif selon la revendication 10,
**caractérisé en ce**
**que** d'autres outils sont disposés sur des chariots de déplacement (8, 10) pouvant être déplacés et commandés respectivement de manière séparée.

12. Dispositif selon la revendication 11,
**caractérisé en ce**
**que** les outils sont un dispositif de préchauffage, une ou plusieurs têtes de soudage (11) supplémentaires, un système de suivi de cordon (9), un système d'usinage mécanique du cordon de soudure et/ou un système servant à vérifier sans dégradation le cordon de soudure.

13. Dispositif selon les revendications 10 - 12,
**caractérisé en ce**
**que** les chariots de déplacement (3, 5, 8, 10) sont disposés sur une ou plusieurs bagues de guidage (2) et peuvent être déplacés et commandés de manière séparée.

14. Dispositif selon la revendication 13,
**caractérisé en ce**
**que** les bagues de guidage (2) sont disposées au niveau d'une extrémité de tuyau ou au niveau des deux extrémités de tuyau.
